# EUROPEAN PATENT APPLICATION

(11) **EP 0 674 832 A1**
(43) Date of publication of application: **04.10.1995**
(21) Application number: 95302073.2
(22) Date of filing: 28.03.1995
(51) Int. Cl.: A01K 5/02

(54) **Animal feeding apparatus and method**

(30) Priority: 29.03.1994 GB 9406251
(71) Applicant: Beary, Diarmuid Anthony, Preston, Lancashire PR3 5AR (GB)
(72) Inventor: Beary, Diarmuid Anthony, Preston, Lancashire PR3 5AR (GB)
(74) Representative: Brierley, Anthony Paul

(57) **Abstract**

The apparatus 2 comprises a trailer for supporting a cylindrical mixing tank 14 which communicates, at its lower end, with a liquid outlet pipe 20 through which liquid may flow from the tank 14 under the control of a feed pump 22 driven by a pump motor 24. The outlet pipe 20 communicates, at a downstream end, with pipeline 28 which may be extended around a field, close to pig pens in which feeding troughs are disposed. A plurality of branch lines 86 (Figure 4) communicate with the pipeline 28 and can be used to fill respective feed troughs in the pens. The apparatus 2 may be left in a field for a number of years and, subsequently, moved to another field.

## Description

This invention relates to an animal feeding apparatus and method and particularly, although not exclusively, relates to an apparatus for and a method of feeding pigs.

Various apparatus for and methods of feeding pigs are known. For example, pigs may be fed indoors in purpose-built buildings which include pens for pigs and fixed immovable pipework for delivering liquid feed to each pen. This form of feeding apparatus is very expensive to run and maintain and is generally, therefore, only used on a large scale for intensive feeding of pigs to be fattened for sale.

In view of the problems associated with feeding pigs indoors, pigs, in particular sows, are often fed outdoors using solid feed. Solid feed may be in the form of a dry cob which may comprise cereal and other food matter. There are, however, many problems associated with the use of such cobs. For example, the cobs are relatively expensive to purchase; the cobs may become buried under mud in the fields; and pigs may fight over cobs, with weak pigs being bullied.

It is an object of the present invention to address problems associated with known animal feeding apparatus and methods.

According to a first aspect of the present invention, there is provided animal feeding apparatus comprising:
a support means movable between first and second positions;
a liquid feed receptacle for containing liquid feed, associated with said support means; and
liquid delivery means communicating with the liquid feed receptacle and being arranged to deliver liquid feed from the liquid feed receptacle to a desired location spaced apart from said receptacle.

Said support means is preferably a vehicle having wheels. More preferably, said vehicle is a trailer. Said trailer preferably does not include an integral power means for moving it between its first and second positions. Said support means may include stabilising means, for example in the form of jacks.

Said liquid feed receptacle is preferably supported on the support means. Agitation means is preferably provided for agitating liquid in the receptacle. Said agitation means may comprise a drivable paddle or, alternatively, means may be arranged to direct compressed air into said receptacle in order to agitate liquid therein.

Said liquid delivery means is preferably movable between operator-selectable positions. Said liquid delivery means is preferably flexible, at least in part. Thus, with the support means in a selected one of its first or second positions, said liquid delivery means can be positioned in any one of a multiplicity of operator-selectable positions. Said operator-selectable positions are suitably randomly selectable. For example, the liquid delivery means is suitably arranged so that it can be extended around an animal rearing area for example a field, suitably in which a plurality of animal pens are arranged. Said liquid delivery means is preferably arranged to be extendable into said animal pens. More preferably, said liquid delivery means is arranged so that it can be moved into and removed from said animal pens.

Said liquid delivery means preferably has a first end via which liquid may flow from the liquid feed receptacle to the liquid delivery means and a second end via which liquid may be returned from the liquid delivery means to the liquid feed receptacle. Thus, preferably the liquid delivery means is arranged to circulate liquid from and return liquid back to the liquid feed receptacle.

The liquid delivery means preferably includes a liquid delivery conduit which is arranged to circulate liquid from and return liquid back to the liquid feed receptacle. Said liquid delivery conduit preferably includes connector means for connecting a liquid dispensing means to said liquid delivery conduit. Said liquid delivery conduit may have a length of at least 10m, preferably of at least 20m and, more preferably, of at least 30m.

Said liquid dispensing means is preferably for dispensing liquid at the desired location. A plurality of connector means is preferably provided at positions along said liquid delivery conduit for connecting a plurality of liquid dispensing means to said liquid delivery conduit. Each said liquid dispensing means preferably defines a respective branch of said liquid delivery means. Valve means is preferably provided for controlling the dispense of liquid using a said liquid dispensing means. The liquid delivery conduit preferably includes a plurality of liquid dispensing means fixed to it at spaced apart positions along its extent.

The apparatus may include a liquid receptacle arranged to deliver liquid, for example whey, suitably in measurable amounts to the liquid feed receptacle. The apparatus may include a solids receptacle arranged to deliver solid food, for example meal, suitably in measurable amounts, to the liquid feed receptacle.

The invention extends to an assembly comprising an animal feeding apparatus when associated with an outdoors animal rearing area, for example a field, the feeding apparatus having a support means supporting a liquid feed receptacle for containing liquid feed and liquid delivery means extending within the animal rearing area for delivering liquid feed from the liquid feed receptacle into desired positions within the animal rearing area, wherein the support means is movable between first and second positions.

The animal feeding apparatus of the assembly may be as described in any statement herein.

The invention extends to a method of delivering feed to animals, for example mammals, especially pigs, the method comprising:
arranging a liquid feed receptacle which is associated with a movable support means in a desired location;
arranging a liquid delivery means which communicates with said liquid feed receptacle in a desired location; and
delivering feed from the liquid feed receptacle via said liquid delivery means to a feed container from which the animals may consume the feed.

The method may include the step of moving the support means and parts associated therewith from a first position to a second position.

The method may use the apparatus and/or the assembly described in any statement herein.

The invention extends to the use of the apparatus described herein for delivering feed to animals, for example mammals, especially pigs.

Specific embodiments of the invention will now be described, by way of example, with reference to the accompanying drawings, in which:

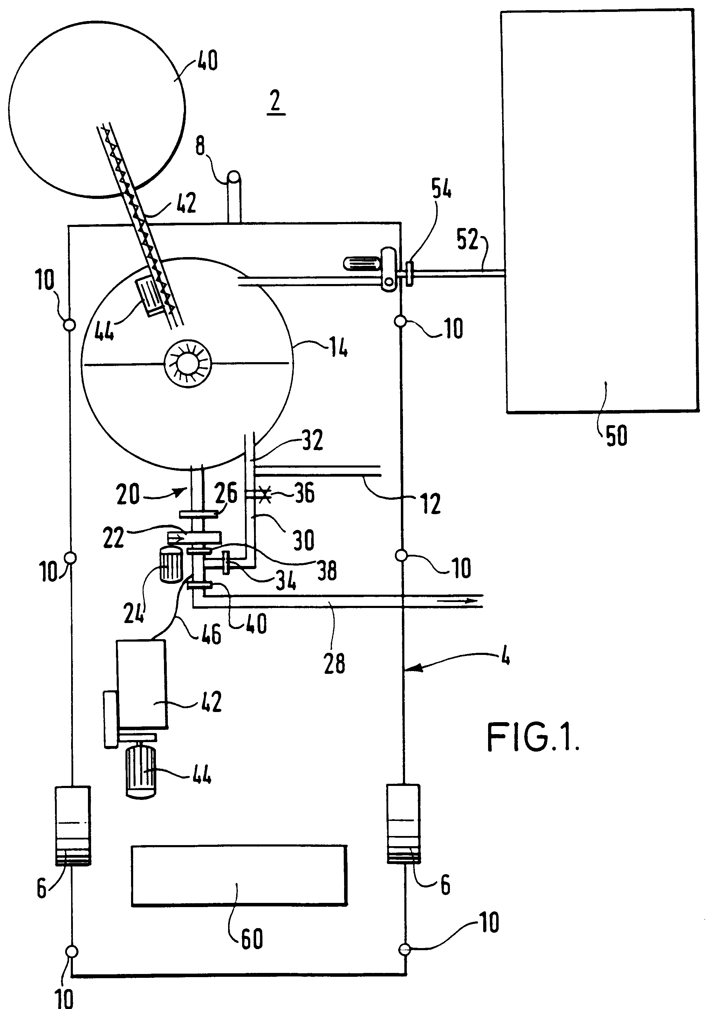

Figure 1 is a schematic top plan view of a pig feeding apparatus excluding a housing thereof;

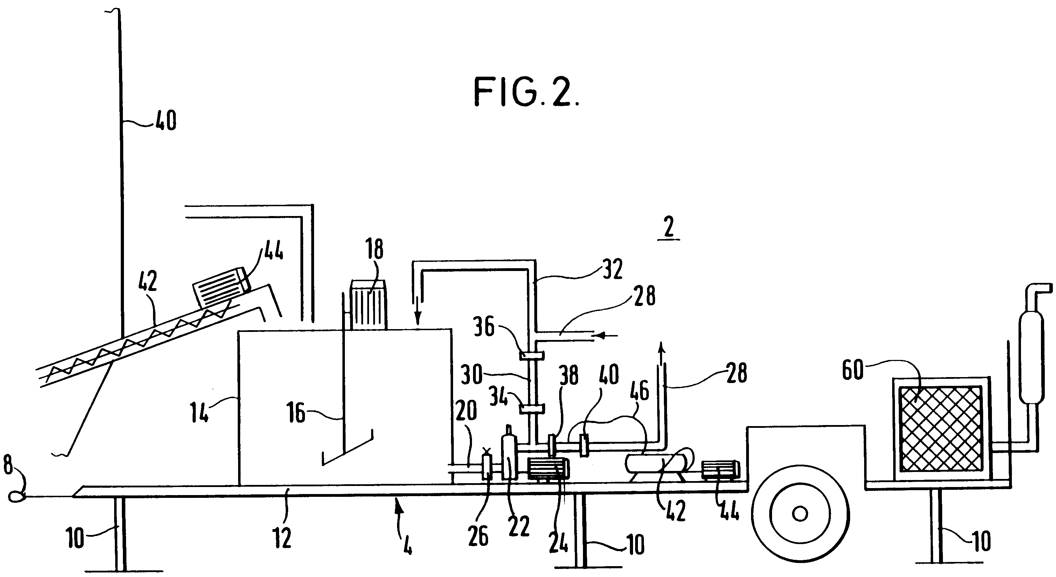

Figure 2 is a side elevation of the apparatus of Figure 1;
Figure 3 is a side elevation showing the housing of the apparatus of Figures 1 and 2; and
Figure 4 is a schematic diagram showing the pig feeding apparatus arranged in a field.

The apparatus 2 comprises a trailer 4 having rear wheels 6 and a towing hitch 8 for moving the trailer around a field to a desired location. When in a desired location, three pairs of jackable legs 10 may be extended to contact the ground and thereby rigidly support the trailer.

A horizontally extending platform 12 of the trailer 4 supports a cylindrical mixing tank 14. A paddle 16 extends into the tank 14 and is arranged to be driven by a motor 18.

The tank 14 communicates, at its lower end, with a liquid outlet pipe 20 through which liquid may flow from the tank 14 under the control of a feed pump 22, driven by a pump motor 24. A valve 26 is provided in pipe 20 for controlling the flow of liquid in the pipe.

The outlet pipe 20 communicates, at a downstream end, with pipe line 28 which may be extended around a field, close to a region in which animal feeding troughs are disposed. Branch lines communicate with the pipe line 28 at certain positions along its extent. A valve is provided in each respective branch line for controlling the flow of liquid from pipe line 28 along the branch lines. The branch lines are arranged to extend to the liquid feed troughs in the field so that the troughs may be filled with liquid.

The outlet pipe 20 also communicates with a by-pass return line 30.

A downstream end of the by-pass return line 30 and a downstream end of the pipe line 28 communicate with a liquid return line 32 which is arranged to deliver liquid back into the tank 14.

An air compressor 42 driven by motor 44 is arranged to drive air through an air line 46 which communicates with line 28.

Valves 34, 36, 38, 40 are provided in lines 30 and 28 for selectively controlling the flow of liquid/air along the lines.

A movable meal hopper 40 is disposed adjacent the trailer 4 and is arranged to deliver measurable quantities of meal, via a feed auger 42 driven by an auger motor 44, into the mixing tank 14.

A movable liquid tank 50, for example containing whey, is disposed adjacent the trailer 4 and is arranged to deliver measurable quantities of liquid via a deliver line 52 to the mixing tank 14. A valve 54 is provided in the delivery line 52.

An electric generator 60 is provided on the trailer 4 for supplying power to the components provided on the trailer, as necessary.

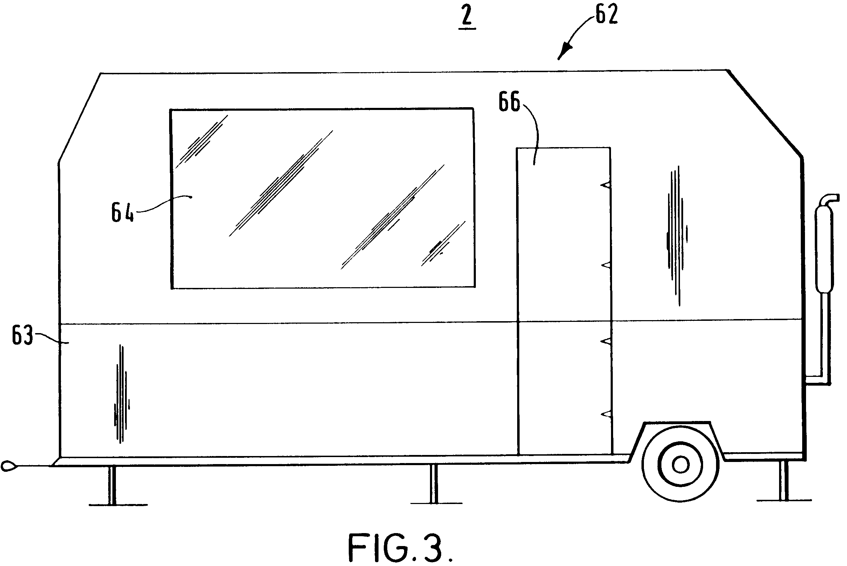

The trailer 4 and components thereupon are suitably surrounded by a housing 62, as shown in Figure 3. The housing includes board sides 63 in which a UPVC window 64 and door 66 are provided.

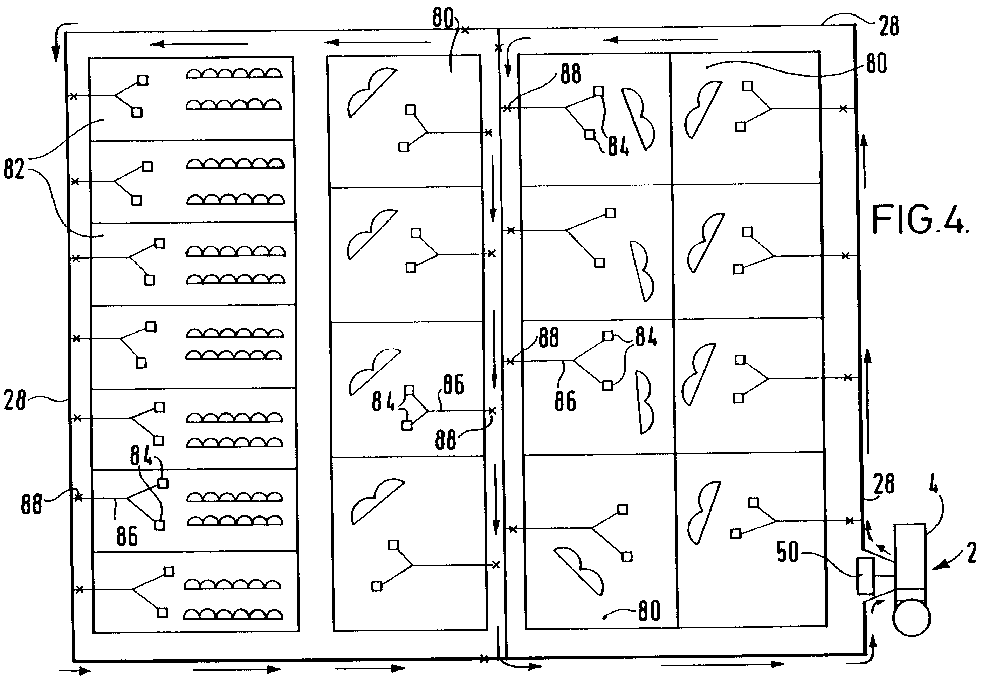

The apparatus 2 may be used as follows to supply liquid feed to pigs held in fenced off areas 80, 82 in a field. In Figure 4, areas 80 represent dry sow and service paddocks and areas 82 represent farrowing paddocks. In each of areas 80, 82 are feed troughs 84 which are fed via a branch pipeline 86 extending from pipeline 28. Respective valves 88 are provided in pipelines 86.

The trailer 4 is firstly suitably positioned in the field outside the fenced off areas. For example, the trailer 4 may be towed by a tractor into a suitable position. Then, the meal hopper 40 is positioned adjacent the trailer and the feed auger 42 is arranged to deliver feed to the mixing tank 14. Similarly, the liquid tank 50 is positioned as necessary so that liquid can be delivered to the mixing tank 14. The pipe line 28 is then extended around the field so as to pass close to the fenced off areas 80, 82. Branch pipelines 86 communicate with pipeline 28 at suitable locations.

When the apparatus has been arranged as described, liquid feed may be mixed in the mixing tank 14, using paddle 16. Then feed pump 22 and pump motor 24 may be activated and valves 34, 36, 38, 40 arranged (either manually or automatically) so that liquid feed is circulated from tank 14, via pipe line 28 and return line 32 back to the tank 14.

To deliver liquid feed to feed troughs 84 positioned within the fenced off areas 80, 82 in the field, an operator may hold an end of a selected branch pipeline 86; the valve 88 in the selected branch line 86 is then opened so that liquid may flow from pipe line 28 into the branch line 86; and the operator may then direct liquid into the selected trough 84. Each feed trough may be filled as necessary using a suitably positioned branch line. As an alternative to the above, liquid may be delivered to the troughs under the control of automatic valves.

In the event that the pipe line 28 becomes clogged (or simply to clean the pipe line 28), the motor 44 and air compressor 42 may be activated and air driven through the pipe line 28 via air line 46, in order to remove any blockage or unwanted liquid.

Also, in order to obviate against the liquid in the pipe line 28 freezing, a heater may be provided for heating liquid in the pipe line.

One advantage of the apparatus 2 described above is that it is readily transported to a desired location. Thus, the apparatus may be moved between fields on a yearly basis. In an alternative embodiment, a trailer may carry all components of the apparatus including a meal hopper 40 and liquid tank 50. In this event, the apparatus may readily be transported around a number of fields on a daily basis in order to fill feed troughs. In a yet further embodiment, which does not include a meal hopper or liquid tank, an operator may charge the mixing tank 14 directly with the desired ingredients.

Another advantage of the apparatus is that the constitution of the feed liquid may be carefully controlled and nutritional additives added if required, depending upon the pigs to be fed.

It should now be appreciated that the apparatus described may provide a relatively simple and cheap means of delivering liquid feed to animals, particularly pigs that are kept in pens outdoors.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Animal feeding apparatus, for example for feeding pigs outdoors, comprising:
a support means movable between first and second positions;
a liquid feed receptacle for containing liquid feed, associated with said support means; and
liquid delivery means communicating with the liquid feed receptacle and being arranged to deliver liquid feed from the liquid feed receptacle to a desired location spaced from said receptacle.

2. Apparatus according to Claim 1, wherein said liquid delivery means is movable between operator-selectable positions.

3. Apparatus according to Claim 1 or Claim 2, wherein said liquid delivery means is arranged so that it can be extended around an animal rearing area, for example a field.

4. Apparatus according to any preceding claim, wherein the liquid delivery means includes a liquid delivery conduit which is arranged to circulate liquid from and return liquid back to the liquid feed receptacle.

5. Apparatus according to Claim 4, wherein said liquid delivery conduit includes a plurality of connector means for connecting liquid dispenser means thereto.

6. Apparatus according to Claim 5, wherein said liquid dispenser means are extendable into respective pens provided in the animal rearing area.

7. Apparatus according to any preceding claim, wherein said support means comprises a trailer which includes stabilising means for stabilising said trailer; and wherein said liquid feed receptacle includes agitation means for agitating liquid in the receptacle.

8. An assembly comprising an animal feeding apparatus when associated with an outdoors animal rearing area, for example a field, the feeding apparatus having a support means supporting a liquid feed receptacle for containing liquid feed and liquid delivery means extending within the animal rearing area for delivering liquid feed from the liquid feed receptacle into desired positions within the animal rearing area, the support means of the apparatus being movable between first and second positions.

9. A method of delivering feed to animals, for example mammals, especially pigs, the method comprising:
arranging a liquid feed receptacle which is associated with a movable support means in a desired location;
arranging a liquid delivery means which communicates with said liquid feed receptacle in a desired location; and
delivering feed from the liquid feed receptacle via said liquid delivery means to a feed container from which the animals may consume the feed.

10. Use of an apparatus according to any of Claims 1 to 7 or an assembly according to Claim 8, for delivering feed to animals, for example mammals, especially pigs.
